# EUROPÄISCHE PATENTSCHRIFT

(11) **EP 2 263 010 B1**
(45) Veröffentlichungstag und Bekanntmachung des Hinweises auf die Patenterteilung: **06.08.2014**
(21) Anmeldenummer: 09732478.4
(22) Anmeldetag: 15.04.2009
(51) Int. Cl.: F04D 19/04, F04D 27/00, F04D 29/32, G08C 17/00

(54) **VAKUUMPUMPE**
VACUUM PUMP
POMPE À VIDE

(30) Priorität: 17.04.2008 DE 102008019472
(43) Veröffentlichungstag der Anmeldung: 22.12.2010
(73) Patentinhaber: Oerlikon Leybold Vacuum GmbH, 50968 Köln (DE)
(72) Erfinder: GREVEN, Alois, 41812 Erkelenz (DE); BEYER, Christian, 50765 Köln (DE)
(74) Vertreter: Von Kreisler Selting Werner - Partnerschaft von Patentanwälten und Rechtsanwälten mbB
(86) Internationale Anmeldenummer: PCT/EP2009/054461
(87) Internationale Veröffentlichungsnummer: WO 2009/127656

(56) Entgegenhaltungen:
- EP-A- 0 780 822
- WO-A-2007/025854
- DE-A1-102004 010 348
- US-A1- 2005 287 386

## Beschreibung

Die Erfindung betrifft eine Vakuumpumpe mit einem Pumpenrotor und einem Pumpenstator, wobei der Pumpenrotor einen Transponder mit einer Rotorantenne und mindestens einen Sensor zur Erfassung verschleißrelevanter Betriebsdaten aufweist, und der Pumpenstator einen Reader mit einer Statorantenne aufweist.

In WO 2007/025854 A1 (Leybold Vacuum GmbH) ist eine Vakuumpumpe beschrieben, bei der der Pumpenrotor einen elektrischen Messwandler trägt, beispielsweise einen Temperatursensor. An dem Pumpenrotor ist eine Sendeantenne vorgesehen, die Daten des Messwandlers an eine Empfangsantenne des Stators überträgt. Dadurch können genaue Messwerte von dem Pumpenrotor zu dem Pumpenstator übertragen werden.

Vakuumpumpen, insbesondere schnelldrehende Turbomolekularpumpen mit Drehzahlen zwischen 10.000 und mehr als 100.000 U/min, sind hochentwickelte Geräte, deren Komponenten extremen Belastungen durch Kompressionswärme, Reibungswärme und Zentrifugalkräfte ausgesetzt sind. Durch zu hohe Rotortemperaturen erhöht sich die Crash-Gefahr, beschleunigt sich die Materialermüdung und ändern sich andere Eigenschaften des Pumpenrotors. Fertigung und Materialwahl des Pumpenrotors unterliegen höchsten Qualitätsanforderungen. Die Vakuumpumpen erfordern regelmäßige Wartungen, bei denen die Pumpe zerlegt wird. Dies gilt insbesondere für den Pumpenrotor, bei dem ein hoher Sicherheitsgrad eingehalten werden muss. Rotoren müssen auch regelmäßig gereinigt werden. Die Überholung oder Wartung eines Pumpenrotors kann in regelmäßigen zeitlichen Intervallen erfolgen. Günstiger ist es jedoch, wenn bei der Festlegung eines Wartungsintervalls die Schwere des Betriebes des Pumpenrotors berücksichtigt wird. Dies kann durch Auswertung gemessener Betriebsdaten, wie Temperatur oder Drehzahl geschehen.

In der (nicht vorveröffentlichten) Patentanmeldung DE 10 2007 009 085 A (Oerlikon Leybold Vacuum GmbH) ist ein Verfahren zur Bestimmung der Ermüdung eines Pumpenrotors einer Turbo-Gaspumpe beschrieben, bei welchem die Rotordrehzahl kontinuierlich ermittelt wird und lokale Drehzahl-Maxima und - Minima ermittelt werden. Die Drehzahl-Maxima und -Minima werden einander zu Paaren zugeordnet. Für jedes der Drehzahlpaare wird ein Paar-Ermüdungswert ermittelt und alle Paar-Ermüdungswerte werden zu einem Gesamt-Ermüdungswert akkumuliert. Der Gesamt-Ermüdungswert bildet eine Lebensdauerkennzahl.

Der Erfindung liegt die Aufgabe zugrunde, eine Vakuumpumpe zu schaffen, bei der das Wartungsmanagement des Pumpenrotors unabhängig von dem jeweiligen Pumpenstator ist, in den der Pumpenrotor eingesetzt ist..

Die erfindungsgemäße Vakuumpumpe zeichnet sich durch die Merkmale des Patentanspruches 1 aus.

Der rotorseitige Speicher enthält verschleißrelevante Betriebsdaten aus dem vergangenen Betrieb des Pumpenrotors. Solche Betriebsdaten sind beispielsweise Temperatur, Drehzahlen (Maxima, Minima) oder auch Materialspannungen oder - dehnungen. Daraus kann die Schwere des Betriebes im Hinblick auf den Materialverschleiß bewertet werden.

Die Erfindung sieht vor, dass aus den Betriebsdaten eine Lebensdauerkennzahl ermittelt wird, die verschleißabhängig ist und den Verschleißgrad des Rotors repräsentiert. Unter Verschleiß ist jegliche Art von Abnutzung und Materialermüdung zu verstehen. Die Lebensdauerkennzahl wird bei jedem Betrieb um einen Belastungswert erhöht, so dass eine aktualisierte Lebensdauerkennzahl entsteht. Die Differenz der jeweiligen Lebensdauerkennzahl bis zu einem festgelegten Grenzwert gibt Aufschluss über den noch verbleibenden möglichen Betrieb des Pumpenrotors. Wenn der Grenzwert erreicht ist, kann die Steuereinheit den weiteren Betrieb der Vakuumpumpe, die den betrachteten Pumpenrotor enthält, unterbinden, indem der Antrieb abgeschaltet wird.

Die Erfindung sieht vor, dass der rotorseitige Speicher die verschleißrelevanten Daten des bisherigen Rotorbetriebes enthält, so dass der Pumpenrotor sein eigenes Gedächtnis hat. Unabhängig von der Vakuumpumpe, in die der Pumpenrotor eingesetzt wird, behält der Pumpenrotor die relevanten Daten, die er permanent bei sich trägt. Der Pumpenrotor kann somit unabhängig von dem jeweiligen Pumpenstator Auskunft über seine Restlaufzeit bzw. über seine Betriebsfähigkeit und seinen jeweiligen Verschleißgrad geben.

Bei der Erfindung ist vorgesehen, dass der rotorseitige Speicher eine aus den Betriebsdaten berechnete Lebensdauerkennzahl speichert. Hierbei kann der Speicherumfang relativ klein sein, da nur eine Kennzahl gespeichert werden muss. Zur Aktualisierung der Lebensdauerkennzahl ist ein Prozessor" erforderlich. Ein Prozessor kann am Rotor vorgesehen sein, in Kombination mit dem Transponder. In diesem Fall erfolgt die Aktualisierung der Lebensdauerkennzahl unmittelbar am Pumpenrotor.

Eine andere Möglichkeit sieht vor, dass Betriebsdaten und die Lebensdauerkennzahl des Pumpenrotors an eine statorseitige Steuereinheit übertragen werden, welche aus den gegenwärtig gemessenen Betriebsdaten einen Belastungswert bildet und diesen zu der Lebensdauerkennzahl hinzufügt, um eine aktualisierte Lebensdauerkennzahl zu bilden. Die aktualisierte Lebensdauerkennzahl wird zu dem Pumpenrotor übertragen und in dem rotorseitigen Speicher gespeichert. Hierbei erfolgt die Datenverarbeitung statorseitig.

Der Transponder kann ein passiver Transponder sein, der von dem Reader über induktive Kopplung mit Strom versorgt wird. Es kann sich aber auch um einen aktiven Transponder mit eigener Stromversorgung handeln. In jedem Fall enthält der Transponder vorzugsweise einen eigenen Speicher und ggf. auch einen Mikroprozessor. Das Transpondersystem ist zur bidirektionalen Informationsübertragung ausgelegt.

Gemäß einer bevorzugten Weiterbildung der Erfindung ist vorgesehen, dass der Pumpenrotor einen Identitätsschutzspeicher enthält, in dem mindestens eine Rotorinformation gespeichert ist, die über den Transponder zum Reader übertragbar ist, und dass die Steuereinheit einen Betrieb der Vakuumpumpe nur zulässt, wenn die Rotorinformation ein vorgegebenes Kriterium erfüllt. Dadurch wird eine Sicherung der Originalität und der Zulassungskonformität von Rotoren ermöglicht. Der Transponder des Pumpenrotors liefert eine Identitätsinformation an den Pumpenstator. In der Steuereinheit wird festgestellt, ob der Pumpenrotor ein Originalteil ist und ob er zu dem jeweiligen Pumpenstor passt bzw. für diesen zugelassen ist. Dadurch wird ein Schutz gegen Vertauschung von Rotoren und die gegen die Verwendung nicht zugelassener (kopierter) Rotoren in Vakuumpumpen erreicht. Dadurch können Schäden und Betriebsausfälle dadurch vermieden werden, dass die Einhaltung des erforderlichen Sicherheitsgrades überwacht wird.

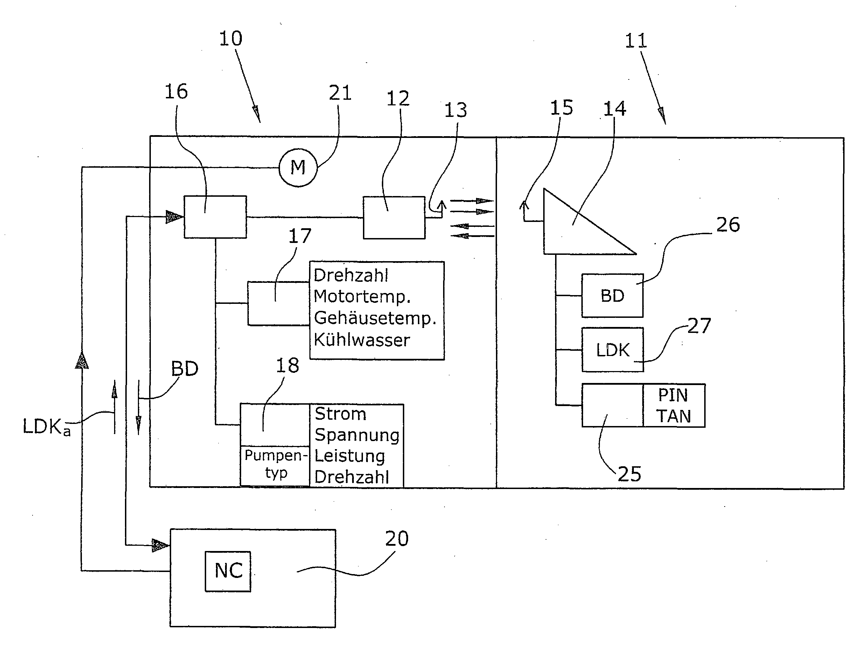

Im Folgenden wird unter Bezugnahme auf die einzige Figur der Zeichnung ein Ausführungsbeispiel der Erfindung näher erläutert.

In der Zeichnung ist das Kommunikationssystem zur Informationsübertragung zwischen Stator und Rotor einer Vakuumpumpe schematisch dargestellt.

Der Aufbau der Vakuumpumpe ist der gleiche wie in WO 2007/025854 A1 . Die Vakuumpumpe ist eine Turbomolekularpumpe mit schnelllaufendem Pumpenrotor. Am Pumpenrotor und am Pumpenstator befinden sich ineinandergreifende Flügelreihen. In der Zeichnung sind der Pumpenstator 10 und der Pumpenrotor 11 nur schematisch dargestellt, weil es im Zusammenhang mit der Erfindung hauptsächlich um das Kommunikationssystem geht.

Der Pumpenstator enthält einen Reader 12 eines RFID-Systems. Der Reader ist mit einer Statorantenne 13 verbunden. Der Pumpenrotor enthält einen RFID-Transponder 14 oder Tag mit einer Rotorantenne 15. Die Datenübertragung zwischen Reader 12 und Transponder 14 erfolgt drahtlos bidirektional über die Antennen 13 und 15.

Der Reader 12 ist mit einer (nicht dargestellten) Stromversorgung versehen. Die Stromversorgung des Transponders 14 kann drahtlos über die Antennen 13 und 15 vom Reader aus erfolgen.

Der Pumpenstator 10 enthält einen Speicher 16, der bidirektional mit dem Reader 12 kommuniziert. Der Speicher 16 ist mit verschiedenen Sensoren 17 verbunden, zu denen ein Drehzahlsensor, ein Motortemperatursensor, ein Gehäusetemperatursensor und ein Kühlwassersensor gehören können. Ein Parameterspeicher 18 enthält eine Information über den Pumpentyp sowie die festgelegten Betriebswerte von Strom, Spannung, Leistung und Drehzahl.

Der Speicher 16 kommuniziert mit einer Steuereinheit 20, die einen Mikroprozessor enthält. Die Steuereinheit 20 steuert den Motor 21, der den Pumpenrotor 11 antreibt.

Der Transponder 14 ist mit einem Identitätsschutzspeicher 25 verbunden, der eine Rotorinformation als Kopierschutzdatum enthält. Die Rotorinformation kann eine PIN oder TAN sein.

Der Pumpenrotor 11 enthält Sensoren 26 zur Messung von Betriebsdaten BD. Beispielsweise handelt es sich um Temperatursensoren, Dehnmessstreifen, Beschleunigungssensoren oder Drehzahlsensoren. Diese Aufzählung ist nicht abschließend und kann um andere Sensortypen erweitert werden. Der Rotor enthält ferner einen rotorseitigen Speicher 27, der auch in den Transponder 14 integriert sein kann.

Bei einer Ausführungsform der Erfindung ist der Speicher 27 derart vorgesehen, dass er eine Historie von Betriebsdaten BD des Pumpenrotors speichert. In diesem Fall ist ein relativ großer Speicher 27 erforderlich.

Bei einer anderen Ausführungsform speichert der Speicher 27 eine Lebensdauerkennzahl LDK, die aus den gemessenen Betriebsdaten BD errechnet wurde. Bei dem in der Zeichnung dargestellten Ausführungsbeispiel erfolgt die Neuberechnung der Lebensdauerkennzahl LDK in der statorseitigen Steuereinheit 20. Hierzu wird die im Speicher 27 enthaltene Lebensdauerkennzahl LDK vom Transponder 14 zum Reader 12 übertragen und von dort zur Steuereinheit 20. In gleicher Weise werden die laufenden Betriebsdaten BD zur Steuereinheit 20 übertragen. Die Steuereinheit 20 bildet aus den ihr zugeführten Betriebsdaten BD einen Belastungswert und fügt diesen der Lebensdauerkennzahl LDK hinzu, beispielsweise durch Addition, um eine aktualisierte Lebensdauerkennzahl LDKₐ zu bilden. Diese wird über den Reader 12 zum Transponder 14 übertragen und in dem Speicher 27 als aktuelle Lebensdauerkennzahl LDK abgespeichert.

Die Erfindung stellt sicher, dass jeder Pumpenrotor 11 seine Historie oder eine die Historie verkörpernde Lebensdauerkennzahl bei sich trägt. Dies ermöglicht es für den individuellen Pumpenrotor, die noch verfügbare Verschleißdifferenz bis zum nächsten Wartungsvorgang zu ermitteln. Der Benutzer kann somit feststellen, wie viel Restlaufzeit noch zur Verfügung steht oder wie viel Prozent des zulässigen Verschleißes bereits abgelaufen ist. Außerdem wird sichergestellt, dass die Steuereinheit 20 einen Betrieb der Vakuumpumpe unterbindet, wenn die zulässige Verschleißgrenze erreicht ist.

Die Ermittlung der Lebensdauerkennzahl erfolgt vorzugsweise nach dem Verfahren, das in DE 10 2007 009 085 A beschrieben ist . Hiernach werden Drehzahl-Maxima und -Minima eines betrachteten zeitlichen Drehzahlverlaufs ermittelt und einander zu Paaren zugeordnet. Für jedes der Drehzahl-Paare wird ein Paar-Ermüdungswert als Belastungswert erzeugt. Die Paar-Ermüdungswerte werden zu einem Gesamtermüdungswert akkumuliert, welcher die Lebensdauerkennzahl LDK bildet.

## Patentansprüche

1. Vakuumpumpe mit einem Pumpenrotor (11) und einem Pumpenstator (10), wobei der Pumpenrotor einen Transponder (14) mit einer Rotorantenne (15), einen Speicher (27) und mindestens einen Sensor (26) zur Erfassung verschleißrelevanter Betriebsdaten (BD) enthält und der Pumpenstator (10) einen Reader (12) mit einer Statorantenne (13) aufweist,
**dadurch gekennzeichnet,**
**dass** der Speicher (27) eine aufgrund von Betriebsdaten berechnete Lebensdauerkennzahl (LDK) speichert und diese über den Transponder (14) an den Reader (12) ausliest.

2. Vakuumpumpe nach Anspruch 1, **dadurch gekennzeichnet, dass** eine Historie von Betriebsdaten (BD) des Rotors in dem Speicher (27) des Rotors gespeichert wird.

3. Vakuumpumpe nach Anspruch 1, **dadurch gekennzeichnet, dass** die Betriebsdaten (BD) und die Lebensdauerkennzahl (LDK) des Pumpenrotors (11) an eine statorseitige Steuereinheit (20) übertragen werden, welche aus den gegenwärtig gemessenen Betriebsdaten (BD) einen Belastungswert bildet und diesen zu der Lebensdauerkennzahl (LDK) hinzufügt, um eine aktualisierte Lebensdauerkennzahl (LDKₐ) zu bilden, und dass die aktualisierte Lebensdauerkennzahl zu dem Pumpenrotor übertragen und in dem Speicher (27) des Pumpenrotors gespeichert wird.

4. Vakuumpumpe nach einem der Ansprüche 1 - 3, **dadurch gekennzeichnet, dass** die Steuereinheit (20) aus der Historie von Betriebsdaten (BD) oder der Lebensdauerkennzahl (LDK) ermittelt, ob ein weiterer Betrieb der Vakuumpumpe zulässig ist und bei Nichtzulässigkeit den Antrieb abschaltet.

5. Vakuumpumpe nach einem der Ansprüche 1 - 4, **dadurch gekennzeichnet, dass** der Pumpenrotor einen Identitätsschutzspeicher (25) enthält, in dem mindestens eine Rotorinformation gespeichert ist, die über den Transponder (14) zum Reader (12) übertragbar ist, und dass die Steuereinheit (20) einen Betrieb der Vakuumpumpe nur zulässt, wenn die Rotorinformation ein vorgegebenes Kriterium erfüllt.

6. Vakuumpumpe nach Anspruch 5, **dadurch gekennzeichnet, dass** der Pumpenstator (10) einen Parameterspeicher (18) enthält, in dem mindestens eine Statorinformation gespeichert ist, und dass das vorgegebene Kriterium darin besteht, dass die Rotorinformation und die Statorinformation ein zuvor festgelegtes zugelassenes Informationspaar bilden.

## Claims

1. A vacuum pump comprising a pump rotor (11) and a pump stator (10), the pump rotor including a transponder (14) with a rotor antenna (15), a memory (27) and at least one sensor (26) for detecting wear-relevant operating data (BD), and the pump stator (10) includes a reader (12) with a stator antenna (13),
**characterized in that**
the memory (27) stores a service life index (LDK) calculated on the basis of operating data and reads the same to the reader (12) via the transponder (14).

2. The vacuum pump of claim 1, **characterized in that** a history of operating data (BD) of the rotor is stored in the memory (27) of the rotor.

3. The vacuum pump of claim 1, **characterized in that** the operating data (BD) and the service life index (LDK) of the pump rotor (11) are transmitted to a stator-side control unit (20) which forms a load value from the currently measured operating data (BD) and adds the same to the service life index (LDK) in order to form an updated service life index (LDKₐ), and that the updated service life index (LDKₐ) is transmitted to the pump rotor and is stored in the memory (27) of the pump rotor.

4. The vacuum pump of one of claims 1 - 3, **characterized in that** the control unit (20) determines from the history of operating data (BD) or from the service life index (LDK), whether a further operation of the vacuum pump is allowable and cuts off the drive, if it is not allowable.

5. The vacuum pump of one of claims 1 - 4, **characterized in that** the pump rotor includes an identity protection memory (25) in which at least one item of rotor information is stored that can be transmitted to the reader (12) via the transponder (14), and that the control unit (20) allows an operation of the vacuum pump only, if the item of rotor information meets a predefined criterion.

6. The vacuum pump of claim 5, **characterized in that** the pump stator (10) includes a parameter memory (18) in which at least one item of stator information is stored, and that the predefined criterion provides that the rotor information and the stator information form an allowed pair of information items which has been defined in advance.

## Revendications

1. Pompe à vide comprenant un rotor de pompe (11) et un stator de pompe (10), le rotor de pompe comportant un transpondeur (14) doté d'une antenne de rotor (15), une mémoire (27) et au moins un capteur (26) destiné à acquérir des données de fonctionnement (BD) relatives à l'usure, et le stator de pompe (10) présentant un lecteur (12) doté d'une antenne de stator (13),
**caractérisée en ce que**
la mémoire (27) enregistre un indice de durée de vie (LDK) calculé sur la base des données de fonctionnement et le transmet au lecteur (12) par l'intermédiaire du transpondeur (14).

2. Pompe à vide selon la revendication 1, **caractérisée en ce qu'**un historique des données de fonctionnement (BD) du rotor est enregistré dans la mémoire (27) du rotor.

3. Pompe à vide selon la revendication 1, **caractérisée en ce que** les données de fonctionnement (BD) et l'indice de durée de vie (LDK) du rotor de pompe (11) sont transmis à une unité de commande côté stator (20) qui forme une valeur de charge à partir des données de fonctionnement (BD) mesurées au moment considéré et l'ajoute à l'indice de durée de vie (LDK) pour former un indice de durée de vie actualisé (LDKₐ), et **en ce que** l'indice de durée de vie actualisé est transmis au rotor de pompe et enregistré dans la mémoire (27) du rotor de pompe.

4. Pompe à vide selon l'une des revendications 1 à 3, **caractérisée en ce que** l'unité de commande (20) détermine, à partir de l'historique des données de fonctionnement (BD) ou de l'indice de durée de vie (LDK) si une poursuite du fonctionnement de la pompe à vide est autorisée, et déconnecte l'entraînement en cas de non-autorisation.

5. Pompe à vide selon l'une des revendications 1 à 4, **caractérisée en ce que** le rotor de pompe comporte une mémoire de protection d'identité (25) dans laquelle est enregistrée au moins une information de rotor qui peut être transmise au lecteur (12) par l'intermédiaire du transpondeur (14), et **en ce que** l'unité de commande (20) n'admet un fonctionnement de la pompe à vide que si l'information de rotor remplit un critère prédéterminé.

6. Pompe à vide selon la revendication 5, **caractérisée en ce que** le stator de pompe (10) comporte une mémoire de paramètres (18) dans laquelle est enregistrée au moins une information de stator, et **en ce que** le critère prédéterminé consiste **en ce que** l'information de rotor et l'information de stator forment une paire d'informations autorisée préalablement définie.
